# EUROPÄISCHE PATENTSCHRIFT

(11) **EP 1 132 407 B1**
(45) Veröffentlichungstag und Bekanntmachung des Hinweises auf die Patenterteilung: **28.07.2004**
(21) Anmeldenummer: 01103063.2
(22) Anmeldetag: 09.02.2001
(51) Int. Cl.: C08B 15/05, C08B 11/20, C08B 11/193

(54) **Hydrophob modifizierte Celluloseether Verfahren zu deren Herstellung sowie deren Verwendung**
Hydrophobically modified cellulose ethers, process for their preparation and their use
Ethers de cellulose rendus hydrophobes, procédé de préparation et utilisations

(30) Priorität: 15.02.2000 DE 10006603
(43) Veröffentlichungstag der Anmeldung: 12.09.2001
(73) Patentinhaber: SE Tylose GmbH & Co.KG, 65203 Wiesbaden (DE)
(72) Erfinder: Krammer, Ralf, Dr., 67098 Bad Dürkheim (DE); Dönges, Reinhard, Dr., 65812 Bad Soden (DE); Kirchner, Jürgen, Dr., 65201 Wiesbaden (DE); Wurm, Horst, 65201 Wiesbaden (DE)

(56) Entgegenhaltungen:
- DD-A- 299 314
- DE-C- 842 044
- FR-A- 2 770 218
- JP-A- 7 268 001
- US-A- 5 071 978
- J.F.KLEBE ET AL.: "Silyl Cellulose : a new class of soluble cellulose derivatives." JOURNAL OF POLYMER SCIENCE : PART A-1, Bd. 7, 1969, Seiten 1947-1958, XP002171019

## Beschreibung

Die vorliegende Erfindung betrifft wasserlösliche, silylierte Celluloseether, Verfahren zu deren Herstellung sowie deren Verwendung.

Celluloseethern kommt ein breites Spektrum industrieller Anwendungen zu. Sie finden Verwendung als Verdicker, Binde- und Dispergiermittel, Wasserrückhaltemittel, Schutzkolloide, Stabilisatoren, Suspendier-, Emulgier- und Filmbildemittel.

In Dispersionsfarben steuern Celluloseether die Konsistenz und das Wasserrückhaltevermögen, vermindern die Sedimentation der Pigmente und Füllstoffe und verstärken das Haft- und Bindevermögen. Eine wichtige anwendungsorientierte Zielsetzung bei der Herstellung von Dispersionsfarben ist die Einstellung einer möglichst Newton schen Rheologie, da derartige Systeme in Bezug auf Verstreichbarkeit, Verlaufen und Spritzen deutliche Vorteile zeigen im Vergleich zu handelsüblichen Dispersionsfarben, die eine ausgeprägte Strukturviskosität aufweisen. Erreicht wird das erwünschte rheologische Verhalten durch den Einsatz von Celluloseethern, die mit langkettigen Alkylgruppen modifiziert sind bzw. durch die Verwendung herkömmlicher Celluloseether in Kombination mit assoziativ wirkenden synthetischen Verdickern.

Die US-A-4 228 277 beschreibt die Modifizierung von Hydroxyethylcellulose durch den Einbau weniger langkettiger Alkylgruppen, wodurch die Rheologie in der oben beschriebenen Weise verändert und die Spritzneigung unterdrückt wird.

Mit durch Perfluoralkylsubstituenten modifizierter Hydroxyethylcellulose erreicht man, wie in der EP-A-0 476 507 beschrieben, die gleichen Effekte schon bei Substitutionsgraden, die um den Faktor 10 bis 100 geringer sind.

Vorteilhafter wären jedoch hydrophob modifizierte Celluloseether, die bei vergleichbar niedrigen Substitutionsgraden eine vergleichbare Wirkung zeigen, dabei allerdings frei von fluorhaltigen Substituenten sind.

Bei der radikalischen Polymerisation wasserunlöslicher Vinylmonomerer in wässrigen, lösungsmittelfreien Reaktionsmedien finden wasserlösliche Cellulosederivate neben anderen polymeren Kohlenhydraten, wie z.B. Stärke und Dextranen, Verwendung als Schutzkolloide, da nach erfolgter Polymerisation in derartigen Systemen eine Stabilisierung des Polymers erforderlich ist. Hydroxyethylcellulose stellt z.B. bei der Herstellung von Polyvinylacetat-Dispersionen durch Emulsionspolymerisation das am häufigsten verwendete Schutzkolloid dar. Die Wahl des Schutzkolloids übt einen bedeutenden Einfluss auf eine Vielzahl von Qualitätskriterien der Polymerdispersion aus. Zu diesen zählen die Stabilität, die Rheologie, die Viskosität, die Teilchengröße der Polymerpartikel und die Menge an Koagulat, welche bei der Filtration der Dispersion durch ein Sieb zurückbleibt.
Der entscheidende Prozess bei der Emulsionspolymerisation hinsichtlich der Funktion des Schutzkolloids ist die Pfropfung des Monomers auf das Kolloid, wobei die Pfropfrate einerseits von der Wahl des Initiatorsystems und andererseits von der Natur des Schutzkolloids abhängt. Bei einer niedrigen Pfropfrate muss dementsprechend die Einsatzmenge des Schutzkolloids erhöht werden, was eine erhöhte Hydrophilie des zu einem Film ausgezogenen Polymers bewirkt, wodurch es zu einer verstärkten Wasseraufnahme kommt, die unerwünscht ist. Außerdem ist eine Erhöhung der Einsatzmenge mit einer Kostensteigerung verbunden.
Laut der US-A-4 845 175 kann die Menge an Schutzkolloid reduziert werden, wenn als Schutzkolloid hydrophob modifizierte Hydroxyethylcellulose eingesetzt wird.

Bekannt ist, dass die Einführung von Silylgruppierungen in organische Verbindungen eine signifikante Erhöhung des lipophilen Charakters der derart modifizierten Verbindungen bewirkt (D. Klemm, B. Philipp, T. Heinze, U. Heinze, W. Wagenknecht, Comprehensive Cellulose Chemistry, Volume 2, Wiley-VCH Verlag, 1998, Seite 274).
Spezielle Siliziumverbindungen sind bereits mehrfach zur Modifizierung von Celluloseethem herangezogen worden.

So werden in der US-A-4 474 950 spezielle Silane verwendet um wasserlösliche Celluloseether derart zu modifizieren, dass sie sich klumpenfrei in ein wässriges Medium innerhalb eines weiten pH-Bereichs einrühren lassen.

In der US-A-4 992 538 wird beschrieben, dass mit bestimmten siliziumorganischen Verbindungen modifizierte Celluloseether wasserunlösliche Filme bilden, wenn sie aus einer wässrigen Lösung in Gegenwart von atmosphärischem Kohlendioxid getrocknet werden. Zu diesem Zweck ist es erforderlich, dass am Siliziumatom mindestens noch eine hydrolysierbare Gruppe, wie ein Halogenatom, eine Alkoxy-, eine Aryloxy-, eine Acyloxy-, eine Siloxygruppierung oder eine Amino- oder Thiofunktion gebunden ist, da nur dann die für die Filmbildung ursächlichen Vernetzungen ausgebildet werden können.

Aufgabe der vorliegenden Erfindung war die Entwicklung neuartiger hydrophob modifizierter, wasserlöslicher Celluloseether, die schon bei sehr niedrigen Substitutionsgraden bezüglich der hydrophoben Substituenten eine stark verdickende Wirkung in wässriger Lösung zeigen.

Überraschend wurde nun gefunden, dass wasserlösliche, mit mindestens einer Organosilylgruppe, enthaltend eines oder mehrere Siliziumatome, silylierte Celluloseether, die dadurch gekennzeichnet sind, dass die Organosilylgruppe(n) hydrolysestabil an den Celluloseether gebunden ist (sind) und die restlichen Substituenten des Siliziumatoms bzw. der Siliziumatome der Organosilylgruppe(n) hydrolysestabil sind, schon bei sehr niedrigen Substitutionsgraden eine stark verdickende Wirkung in wässriger Lösung zeigen.

Gegenstand der Erfindung sind somit wasserlösliche, mit mindestens einer Organosilylgruppe, enthaltend eines oder mehrere Siliziumatome, silylierte Celluloseether, die dadurch gekennzeichnet sind, dass die Organosilylgruppe(n) hydrolysestabil an die Celluloseether gebunden ist (sind) und die restlichen Substituenten des Siliziumatoms bzw. der Siliziumatome der Organosilylgruppe(n) hydrolysestabil sind.

Bevorzugt handelt es sich bei dem silylgruppenhaltigen bzw. den silylgruppenhaltigen Reagenzien zur Silylierung der Celluloseether um Organosiliziumverbindungen mit den allgemeinen Zusammensetzungen 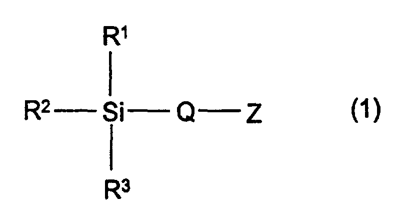 und/oder 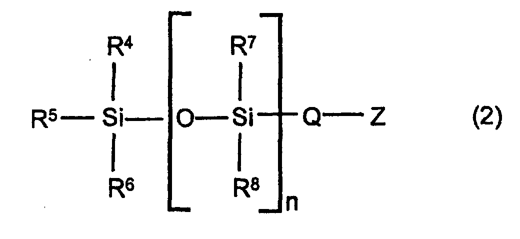 wobei
a) R¹ bis R⁸ unabhängig voneinander gleich oder verschieden sind und geradkettige oder verzweigte Alkylradikale, geradkettige oder verzweigte Alkenylradikale, Arylradikale und /oder Arylalkylradikale mit geradkettigen und/oder verzweigten Alkylgruppen darstellen,
b) Z eine zur kovalenten Bindung an Celluloseether geeignete reaktive funktionelle Gruppe aus der Gruppe Cl, Br, 1, Isocyanat, der Epoxygruppierungen, der Glycidoxygruppierungen, der Säurehalogenidgruppierungen und/oder der Säureanhydridgruppierungen darstellt,
c) Q eine Spacergruppe zwischen der reaktiven Gruppe Z und der Organosilylgruppe darstellt und
d) n gleich 1 bis 100 ist.

Bevorzugt handelt es sich bei R¹ bis R⁸ um (C₁-C₂₀)-Alkylreste oder Phenylreste. Als reaktive funktionelle Gruppe Z eignen sich bevorzugt Epoxygruppierungen.

Als Spacergruppe Q sind bevorzugt (C₁-C₂₀)-Kohlenwasserstoffketten geeignet. n beträgt bevorzugt 1 bis 50.

Die durchschnittliche Anzahl der Silylgruppierungen pro Anhydroglucoseeinheit (DS Silyl) beträgt bevorzugt 0,0002 bis 0,2.

Zur Silylierung bevorzugt verwendete Celluloseether sind Hydroxyethylcellulose, Hydroxypropylcellulose, Carboxymethylcellulose, Carboxymethylhydroxyethylcellulose, Methylcellulose, Methylhydroxyethylcellulose und Methylhydroxypropylcellulose.

Gegenstand der vorliegenden Erfindung sind auch Verfahren zur Herstellung der erfindungsgemäßen silylierten Celluloseether.
Bei einem Verfahren (A) wird Cellulose unter Basenkatalyse mit einem oder mehreren Veretherungsmitteln aus der Gruppe Ethylenoxid, Propylenoxid, Methylchlorid, Monochloressigsäure und Natriummonochloracetat und mindestens einem Silylierungsreagenz umgesetzt.
Bei einem Verfahren (B) wird von einem Celluloseether ausgegangen, der unter Basenkatalyse mit mindestens einem Silylierungsreagenz umgesetzt wird.
Zur Silylierung bevorzugt geeignete Celluloseether sind Hydroxyethylcellulose, Hydroxypropylcellulose, Carboxymethylcellulose, Carboxymethylhydroxyethylcellulose, Methylcellulose, Methylhydroxyethylcellulose oder Methylhydroxypropylcellulose.
Bei beiden Verfahren eignen sich als Silylierungsreagenzien bevorzugt Organosilane der allgemeinen Zusammensetzungen (1) und/oder (2). Besonders bevorzugt sind Organosilane der allgemeinen Zusammensetzungen (1) und/oder (2), bei denen es sich bei R¹ bis R⁸ um C₁-C₂₀-Alkylreste oder Phenylreste, bei Z um eine Epoxygruppierung und bei der Spacergruppe Q um eine C₁-C₂₀-Kohlenwasserstoffkette handelt.
Bei beiden Verfahren erfolgen die Umsetzungen vorzugsweise in einem Suspensionsmittel. Als Suspensionsmittel werden dabei bevorzugt niedere Alkohole, wie z.B. Isopropanol, tert. Butanol oder Ketone, wie z.B. Aceton, eingesetzt. Das Gewichtsverhältnis von Suspensionsmittel zu Cellulose bzw. von Suspensionsmittel zu Celluloseether beträgt bei beiden Verfahren bevorzugt 3:1 bis 30:1 und besonders bevorzugt 8:1 bis 15:1.

Als Basen finden üblicherweise wässrige Lösungen von Alkalimetallhydroxiden, insbesondere Natriumhydroxid, Verwendung.

Beim Verfahren (A) beträgt das Molverhältnis Base/Anhydroglucoseeinheit bevorzugt 1,0 bis 1,5 und beim Verfahren B beträgt es bevorzugt 0,1 bis 1,0. Der Wassergehalt der Reaktionsmischungen beträgt bevorzugt 5 bis 30 und besonders bevorzugt 10 bis 20 Mol Wasser pro Anhydroglucoseeinheit.
Beim Verfahren (A) geht man vorteilhafterweise so vor, dass nach Vorlegen des Suspensionsmittels, Zugabe der Cellulose und Alkalisierung mit der wässrigen Base der Ansatz gut homogenisiert wird und ohne Wärmezufuhr, gegebenenfalls unter Kühlung, vorzugsweise 0,5 bis 2 Stunden gerührt wird. Danach werden das Veretherungsreagenz und das Silylierungsreagenz gemeinsam oder nacheinander zugegeben. Ebenfalls möglich ist auch die Zugabe des Silylierungsreagenz im Verlauf der Reaktion unter den im folgenden beschriebenen Reaktionsbedingungen. Der Ansatz wird auf die bevorzugte Temperatur von 40 bis 120 °C, insbesondere 80 bis 100 °C, gebracht und vorzugsweise 2 bis 6 Stunden lang erhitzt. Nach Abkühlen wird mit einer Säure, vorzugsweise Salzsäure, Salpetersäure oder Essigsäure, vorzugsweise auf pH 6 bis 8 neutralisiert. Das Suspensionsmittel wird durch Dekantieren oder Filtrieren entfernt, der rohe Cellulosemischether kann durch Extraktion mit wässrigen Alkoholen oder Ketonen mit einem bevorzugten Wasseranteil von 10 bis 50 Gew.-%, insbesondere Isopropanol, Ethanol oder Aceton, von den anhaftenden Nebenprodukten, beispielsweise Polyglykolen, Glykolethem und Salzen, befreit werden. Durch Trocknen im Vakuum oder bei Normaldruck bei 50 bis 120 °C erhält man den gewünschten Cellulosemischether als farbloses bis leicht gelbliches Pulver.

Beim Verfahren (B) wird nach Vorlegen des Suspensionsmittels, Zugabe des Celluloseethers und Alkalisierung mit der wässrigen Base der Ansatz gut homogenisiert und ohne Wärmezufuhr, gegebenenfalls unter Kühlung, vorzugsweise 0,5 bis 2 Stunden gerührt. Danach gibt man das Silylierungsreagenz zu und heizt den Ansatz auf die bevorzugte Temperatur von 40 bis 120 °C, insbesondere 80 bis 100 °C, auf und erhitzt vorzugsweise 2 bis 6 Stunden lang. Nach Abkühlen wird mit einer Säure, vorzugsweise Salzsäure, Salpetersäure oder Essigsäure, vorzugsweise auf pH 6 bis 8 neutralisiert. Das Suspensionsmittel wird anschließend durch Dekantieren oder Filtrieren entfernt, das Rohprodukt kann dann durch Extraktion mit wässrigen Alkoholen oder Ketonen mit einem bevorzugten Wasseranteil von 10 bis 50 Gew.-%, insbesondere Isopropanol, Ethanol und Aceton, von den anhaftenden Nebenprodukten und Salzen befreit werden. Durch Trocknen im Vakuum oder bei Normaldruck bei 50 bis 120 °C erhält man den gewünschten Cellulosemischether als farbloses bis leicht gelbliches Pulver.

Bei Bedarf kann bei beiden Verfahren der gewünschte Polymerisationsgrad des Celluloseethers vor oder im Laufe seines Herstellungsprozesses durch Zugabe einer Peroxoverbindung, wie zum Beispiel Wasserstoffperoxid oder eines Peroxodisulfatsalzes oder eines anderen Oxidationsmittels, beispielsweise Natriumchlorit, eingestellt werden. Die genannten Methoden zum Molekulargewichtsabbau und deren jeweilige technische Durchführung sind im Stand der Technik beschrieben (T. M. Greenway in "Cellulosic Polymers, Blends and Composites", Herausgeber R. D. Gilbert, Carl Hanser Verlag München, 1994, S. 178 ff.).

Bevorzugte Reaktionsapparate zur Herstellung der erfindungsgemäßen silylierten Celluloseether sind beispielsweise Rührkessel, Mischer und Kneter. Grundsätzlich können jedoch alle Reaktionsapparate verwendet werden, die bei der Herstellung von Cellulosederivaten allgemein üblich sind und eine ausreichende Durchmischung der Cellulose oder des wasserlöslichen Celluloseethers mit dem Silylierungsreagenz gestatten.

Die Herstellung der bevorzugt zur Silylierung verwendeten Epoxyorganosilane kann beispielsweise durch Hydrosilylierung von Allylglycidylether mit Triorgano-H-Silanen unter Platin-Katalyse in Toluol in Anlehnung an eine Vorschrift nach E. P. Plueddemann und G. Fanger, J. Am. Chem. Soc. 81 (1959), 2632 erfolgen.

In Abhängigkeit vom Silylierungsreagenz und vom Silylierungsgrad ergibt sich ein vielseitiges Anwendungsspektrum der erfindungsgemäßen silylierten Celluloseether.

Sie eignen sich besonders als Hilfsstoffe mit verdickender Wirkung in Farben, Klebern und Kosmetika, wobei die Wirkung vorteilhafterweise schon bei sehr niedrigen Silylierungsgraden eintritt.

Insbesondere geeignet sind die erfindungsgemäßen Celluloseether zur Reduzierung der Spritzneigung in Dispersionsfarben. Vorteilhafterweise tritt dabei nur eine geringe Nachverdickung der Farben auf und das Spritzverhalten kann schon bei relativ niedrigen Farbviskositäten verbessert werden. Gleichzeitig zeigen die Farben eine gute Verstreichbarkeit und eine hohe Scheuerbeständigkeit.

Gegenstand der Erfindung ist auch die Verwendung der erfindungsgemäßen Celluloseether als Schutzkolloide bei der Herstellung von wässrigen Polymerdispersionen. Bevorzugtes Einsatzgebiet ist dabei die radikalisch initiierte Polymerisation von ethylenisch ungesättigten Monomeren in wässriger Emulsion.

Die nachfolgenden Beispiele dienen der näheren Erläuterung der Erfindung ohne sie jedoch einzuschränken.

### Beispiel 1: Herstellung von erfindungsgemäßen Celluloseethern durch Silylierung von Zellstoff mit verschiedenen Epoxyorganosilanen (Verfahren (A))

In einem 2 l Glasreaktor mit Ankerrührer wird fein gemahlener Zellstoff in einem Lösungsmittelgemisch (LM) aus t-Butanol und Isopropanol suspendiert. Nach dem Inertisieren (evakuieren und fluten mit Stickstoff) lässt man unter Rühren bei 20°C eine Lösung aus Natronlauge und Wasser zulaufen. Es wird 60 Minuten bei 20°C alkalisiert. Anschließend lässt man Ethylenoxid (EO) zulaufen und hält die Temperatur 1 Stunde lang bei 40°C und danach 90 Minuten bei 80°C. Dann gibt man bei ca. 80°C die gewünschte Menge des entsprechenden Epoxyorganosilans gelöst in t-Butanol zu und verethert 3 Stunden bei 80°C. Nach dem Abkühlen auf Zimmertemperatur wird mit ca. 65 %iger Salpetersäure und Eisessig neutralisiert. Das Produkt wird abgesaugt, mit 80 %igem wässrigem Aceton ausgewaschen, in 100 %igem Aceton aufgeschlagen und bei 70°C getrocknet.

In Tabelle 1 sind für die Ansätze a bis f die Einsatzmengen der Reaktanden, die Substitutionsgrade MS(OC₂H₄OH) und DS(Organosilylgruppierung) und die Viskositäten (2 %ige Lösung, Hoeppler-Methode) der Produkte zusammengefasst. Die für die verschiedenen Ansätze verwendeten Epoxyorganosilane sind in Tabelle 2 aufgeführt. Man erkennt , dass die Silylierung einen deutlichen Anstieg der Viskosität bewirkt.

**Tabelle 1:**

| Ansätze a bis f aus Beispiel 1 | | | | | | | | |
|---|---|---|---|---|---|---|---|---|
| | Einsatzmengen (g) | | | | | Substitutionsgrade | | Viskositäten (mPas) |
| Ansatz | Zellstoff | LM | NaOH | EO | Epoxyorganosilan | MS | DS | |
| a | 85 | 727 | 26 | 82 | - | 2,60 | - | 1780 |
| b | 85 | 727 | 26 | 82 | 24 | 2,67 | 0,030 | 14 000 |
| c | 85 | 727 | 26 | 82 | 20 | 2,64 | 0,035 | 2771 |
| d | 85 | 727 | 26 | 82 | 15 | 2,68 | 0,0047 | 5860 |
| e | 85 | 727 | 26 | 82 | 10 | 2,75 | <0,0025 | 3290 |
| f | 85 | 727 | 26 | 82 | 14 | 2,75 | <0,0025 | 3408 |

**Tabelle 2:**

| in Beispiel 1 als Silylierungsreagenzien eingesetzte Epoxyorganosilane | |
|---|---|
| Ansatz | Silylierungsreagenz |
| b | 3-(2,3-Epoxypropoxy)-propyltriethylsilan |
| c | 3-(2,3-Epoxypropoxy)-propylphenyldimethylsilan |
| d | 3-(2,3-Epoxypropoxy)-propyl-tri-n-hexylsilan |
| e | 3-(2,3-Epoxypropoxy)-propyl-octadecyldimethylsilan |
| f | 3-(2,3-Epoxypropoxy)-propyl-octadecyldimethylsilan |

### Beispiel 2: Herstellung eines erfindungsgemäßen Celluloseethers durch Silylierung von Hydroxyethylcellulose mit 3-(2,3-Epoxypropoxy) propylphenyl-dimethylsilan (Verfahren (B))

In einem 1 I Dreihalskolben mit Rührer werden 90 g Hydroxyethylcellulose (®Tylose H 4000, Clariant GmbH) in Isopropanol suspendiert. Dazu lässt man nach dem Inertisieren (evakuieren und fluten mit Stickstoff) eine Lösung aus NaOH und Wasser zulaufen. Es wird 30 Minuten bei 25°C alkalisiert. Dann wird 3-(2,3-Epoxypropoxy)-propylphenyldimethylsilan als Silylierungsreagenz zugegeben und auf 80°C aufgeheizt. Bei dieser Temperatur wird die Reaktion 4 Stunden belassen. Danach wird auf Zimmertemperatur abgekühlt und mit Essigsäure gegen Phenolphthalein neutralisiert. Das Produkt wird abgesaugt, mit 85 %igem Isopropanol salzfrei gewaschen, nochmals in 100 %igem Aceton aufgeschlagen und bei 70°C im Trockenschrank getrocknet. In Tabelle 3 sind für die Ansätze a bis f die Einsatzmengen der Reaktanden, die Substitutionsgrade MS(OC₂H₄OH) und DS(Organosilylgruppierung) und die Viskositäten (2%ige Lösung, Hoeppler-Methode) der Produkte zusammengefasst. Man erkennt, dass die Silylierung einen deutlichen Anstieg der Viskosität bewirkt.

**Tabelle 3:**

| Ansätze a bis f aus Beispiel 2 | | | | | | | | |
|---|---|---|---|---|---|---|---|---|
| | Einsatzmengen (g) | | | | | Substitutiongrade | | Viskositäten (mPas) |
| Ansatz | Tylose H 4000 | Isopropanol | H₂O | NaOH | Epoxyorganosilan | MS | DS | |
| a | 90 | 360 | 54 | 2,65 | - | 2,32 | - | 3770 |
| b | 90 | 360 | 54 | 2,65 | 1,65 | 2,32 | 0,007 | 4035 |
| c | 90 | 360 | 54 | 2,65 | 5,79 | 2,32 | 0,027 | 4941 |
| d | 90 | 360 | 54 | 2,65 | 8,28 | 2,32 | 0,036 | 5607 |
| e | 90 | 360 | 54 | 2,65 | 9,11 | 2,32 | 0,042 | 5459 |
| f | 90 | 360 | 54 | 2,65 | 9,19 | 2,32 | 0,064 | 6705 |

### Beispiel 3: Herstellung eines erfindungsgemäßen Celluloseethers durch Silylierung von Hydroxyethylcellulose mit 3-(2,3-Epoxypropoxy)-propyltri-n-hexylsilan (Verfahren (B))

Die Durchführung der Silylierung der Hydroxyethylcellulose erfolgt analog der Versuchsdurchführung in Beispiel 2. Als Silylierungsreagenz wird jedoch 3-(2,3-Epoxypropoxy)-propyl-tri-n-hexylsilan verwendet. In Tabelle 4 sind für die Ansätze a bis i die Einsatzmengen der Reaktanden, die Substitutionsgrade MS(OC₂H₄OH) und DS(Organosilylgruppierung) und die Viskositäten (2 %ige Lösung, Hoeppler-Methode) der Produkte zusammengefasst.

**Tabelle 4:**

| Ansätze a bis i aus Beispiel 3 | | | | | | | | |
|---|---|---|---|---|---|---|---|---|
| | Einsatzmengen (g) | | | | | Substitutionsgrade | | Viskositäten (mPas) |
| Ansatz | Tylose H 4000 | Isopropanol | H₂O | NaOH | Epoxyorganosilan | MS | DS | |
| a | 90 | 360 | 54 | 2,65 | - | 2,32 | - | 3770 |
| b | 90 | 360 | 54 | 2,65 | 1,03 | 2,32 | 0,0004 | 4332 |
| c | 90 | 360 | 54 | 2,65 | 2,06 | 2,32 | 0,0007 | 6640 |
| d | 90 | 360 | 54 | 2,65 | 2,48 | 2,32 | 0,0009 | 7249 |
| e | 90 | 360 | 54 | 2,65 | 3,09 | 2,32 | 0,0011 | 16443 |
| f | 90 | 360 | 54 | 2,65 | 3,54 | 2,32 | 0,0015 | 27027 |
| g | 90 | 360 | 54 | 2,65 | 5,16 | 2,32 | 0,0019 | 28753 |
| h | 90 | 360 | 54 | 2,65 | 6,19 | 2,32 | 0,0022 | 124423 |
| i | 90 | 360 | 54 | 2,65 | 7,07 | 2,32 | 0,003 | 154550 |

### Beispiel 4: Herstellung eines erfindungsgemäßen Celluloseethers durch Silylierung von Hydroxyethylcellulose mit 3-(2,3-Epoxypropoxy)-propyltriethylsilan (Verfahren (B))

Die Silylierung der Hydroxyethylcellulose erfolgt analog der Versuchsdurchführung in Beispiel 2. Als Silylierungsreagenz wird jedoch 3-(2,3-Epoxypropoxy)-propyltriethylsilan verwendet. In Tabelle 5 sind für die Ansätze a bis k die Einsatzmengen der Reaktanden, die Substitutionsgrade MS(OC₂H₄OH) und DS (Organosilylgruppierung) und die Viskositäten (2 %ige Lösung, Hoeppler-Methode) der Produkte zusammengefasst.

**Tabelle 5:**

| Ansätze a bis k aus Beispiel 4 | | | | | | | | |
|---|---|---|---|---|---|---|---|---|
| | Einsatzmengen (g) | | | | | Substitutionsgrade | | Viskositäten (mPas) |
| Ansatz | Tylose H 4000 | Isopropanol | H₂O | NaOH | Epoxyorganosilan | MS | DS | |
| a | 90 | 360 | 54 | 2,65 | - | 2,32 | - | 3770 |
| b | 90 | 360 | 54 | 2,65 | 0,71 | 2,32 | 0,003 | 4681 |
| c | 90 | 360 | 54 | 2,65 | 1,44 | 2,32 | 0,004 | 5207 |
| d | 90 | 360 | 54 | 2,65 | 2,16 | 2,32 | 0,005 | 5379 |
| e | 90 | 360 | 54 | 2,65 | 2,88 | 2,32 | 0,008 | 5645 |
| f | 90 | 360 | 54 | 2,65 | 4,28 | 2,32 | 0,014 | 5759 |
| g | 90 | 360 | 54 | 2,65 | 5,13 | 2,32 | 0,011 | 5857 |
| h | 90 | 360 | 54 | 2,65 | 5,71 | 2,32 | 0,013 | 7080 |
| i | 90 | 360 | 54 | 2,65 | 6,60 | 2,32 | 0,020 | 10471 |
| j | 90 | 360 | 54 | 2,65 | 7,13 | 2,32 | 0,018 | 10475 |
| k | 90 | 360 | 54 | 2,65 | 8,56 | 2,32 | 0,026 | 28388 |

### Beispiel 5: Herstellung eines erfindungsgemäßen Celluloseethers durch Silylierung von Hydroxyethylcellulose mit 3-(2,3-Epoxypropoxy)-propyloctadecyl-dimethylsilan (Verfahren (B))

Die Silylierung der Hydroxyethylcellulose erfolgt analog der Versuchsdurchführung in Beispiel 2. Als Silylierungsreagenz wird jedoch 3-(2,3-Epoxypropoxy)-propyloctadecyl-dimethylsilan verwendet. In Tabelle 6 sind für die Ansätze a bis p die Einsatzmengen der Reaktanden, die Substitutionsgrade MS(OC₂H₄OH) und DS(Organosilylgruppierung) und die Viskositäten (2 %ige Lösung, Hoeppler-Methode) der Produkte zusammengefasst.

**Tabelle 6:**

| Ansätze a bis p aus Beispiel 5 | | | | | | | | |
|---|---|---|---|---|---|---|---|---|
| | Einsatzmengen (g) | | | | | Substitutionsgrade | | Viskositäten (mPas) |
| Ansatz | Tylose H 4000 | Isopropanol | H₂O | NaOH | Epoxyorganosilan | MS | DS | |
| a | 90 | 360 | 54 | 2,65 | - | 2,32 | - | 3770 |
| b | 90 | 360 | 54 | 2,65 | 0,14 | 2,32 | < 0,0025 | 5255 |
| c | 90 | 360 | 54 | 2,65 | 0,41 | 2,32 | < 0,0025 | 4947 |
| d | 90 | 360 | 54 | 2,65 | 0,55 | 2,32 | < 0,0025 | 7757 |
| e | 90 | 360 | 54 | 2,65 | 0,69 | 2,32 | < 0,0025 | 11663 |
| f | 90 | 360 | 54 | 2,65 | 0,97 | 2,32 | < 0,0025 | 15745 |
| g | 90 | 360 | 54 | 2,65 | 1,24 | 2,32 | < 0,0025 | 34217 |
| h | 90 | 360 | 54 | 2,65 | 1,38 | 2,32 | < 0,0025 | 36453 |
| i | 90 | 360 | 54 | 2,65 | 1,66 | 2,32 | < 0,0025 | 72333 |
| j | 90 | 360 | 54 | 2,65 | 1,79 | 2,32 | < 0,0025 | 117014 |
| k | 90 | 360 | 54 | 2,65 | 2,07 | 2,32 | < 0,0025 | 181622 |
| l | 90 | 360 | 54 | 2,65 | 2,76 | 2,32 | < 0,0025 | 477990 |
| m | 90 | 360 | 54 | 2,65 | 3,45 | 2,32 | < 0,0025 | Gel |
| n | 90 | 360 | 54 | 2,65 | 4,14 | 2,32 | < 0,0025 | Gel |
| o | 90 | 360 | 54 | 2,65 | 6,92 | 2,32 | 0,0025 | Gel |
| p | 90 | 360 | 54 | 2,65 | 8,29 | 2,32 | 0,0027 | Gel |

## Patentansprüche

1. Wasserlöslicher, mit mindestens einer Organosilylgruppe, enthaltend eines oder mehrere Siliziumatome, silylierter Celluloseether, **dadurch gekennzeichnet, dass** die Organosilylgruppe(n) hydrolysestabil an den Celluloseether gebunden ist (sind) und die restlichen Substituenten des Siliziumatoms bzw. der Siliziumatome der Organosilylgruppe(n) hydrolysestabil sind.

2. Celluloseether nach Anspruch 1, **dadurch gekennzeichnet, dass** es sich bei dem silylgruppenhaltigen Reagens bzw. den silylgruppenhaltigen Reagenzien zur Silylierung des Celluloseethers um Organosiliziumverbindungen mit den allgemeinen Zusammensetzungen 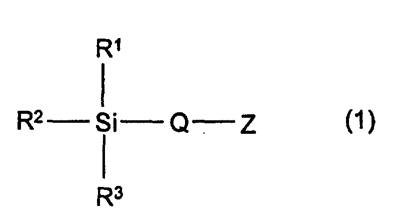 und/oder 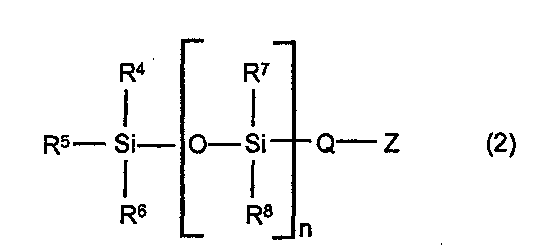 handelt, wobei
a) R¹ bis R⁸ unabhängig voneinander gleich oder verschieden sind und geradkettige oder verzweigte Alkylradikale, geradkettige oder verzweigte Alkenylradikale, Arylradikale und/oder Arylalkylradikale mit geradkettigen und/oder verzweigten Alkylgruppen darstellen,
b) Z eine zur kovalenten Bindung an Celluloseether geeignete reaktive Funktion aus der Gruppe Cl, Br, l, Isocyanat, der Epoxygruppierungen, der Glycidoxygruppierungen, der Säurehalogenidgruppierungen und/oder der Säureanhydridgruppierungen darstellt,
c) Q eine Spacergruppe zwischen der reaktiven Gruppe Z und der Organosilylgruppe darstellt und
d) n gleich 1 bis 100 beträgt.

3. Celluloseether nach Anspruch 2, **dadurch gekennzeichnet, dass** es sich bei R₁ bis R₈ um (C₁-C₂₀)-Alkylreste und/oder Phenylreste, bei Z um eine Epoxygruppierung und bei Q um eine (C₁-C₂₀)-Kohlenwasserstoffkette handelt.

4. Celluloseether nach mindestens einem der Ansprüche 1 bis 3, **dadurch gekennzeichnet, dass** die durchschnittliche Anzahl der Silylgruppierungen pro Anhydroglucoseeinheit (DS Silyl) 0,0002 bis 0,2 beträgt.

5. Celluloseether nach mindestens einem der Ansprüche 1 bis 4, **dadurch gekennzeichnet, dass** es sich bei dem Celluloseether um eine silylierte Hydroxyethylcellulose, eine silylierte Hydroxypropylcellulose, eine silylierte Carboxymethylcellulose, eine silylierte Carboxymethylhydroxyethylcellulose, eine silylierte Methylcellulose, eine silylierte Methylhydroxyethylcellulose oder eine silylierte Methylhydroxypropylcellulose handelt.

6. Verfahren zur Herstellung eines silylierten Celluloseethers gemäß mindestens einem der Ansprüche 1 bis 5, **dadurch gekennzeichnet, dass** Cellulose unter Basenkatalyse mit einem oder mehreren Veretherungsmitteln, aus der Gruppe Ethylenoxid, Propylenoxid, Methylchlorid, Monochloressigsäure und Natriummonochloracetat, und mindestens einem Silylierungsreagenz umgesetzt wird.

7. Verfahren zur Herstellung eines Celluloseethers gemäß mindestens einem der Ansprüche 1 bis 5, **dadurch gekennzeichnet, dass** ein Celluloseether unter Basenkatalyse mit mindestens einem Silylierungsreagenz umgesetzt wird.

8. Verfahren nach Anspruch 7, **dadurch gekennzeichnet, dass** es sich bei dem zu silylierenden Celluloseether um Hydroxyethylcellulose, Hydroxypropylcellulose, Carboxymethylcellulose, Carboxymethylhydroxyethylcellulose, Methylcellulose, Methylhydroxyethylcellulose oder Methylhydroxypropylcellulose handelt.

9. Verfahren nach mindestens einem der Ansprüche 6 bis 8, **dadurch gekennzeichnet, dass** es sich bei den Silylierungsreagenzien um Organosiliziumverbindungen gemäß Anspruch 2 handelt.

10. Verwendung eines silylierten Celluloseethers oder eines Gemisches von silylierten Celluloseethern nach mindestens einem der Ansprüche 1 bis 5 als Hilfsstoff mit verdickender Wirkung in Farben, Klebern und Kosmetika.

11. Verwendung eines silylierten Celluloseethers oder eines Gemisches von silylierten Celluloseethern nach mindestens einem der Ansprüche 1 bis 5 als Schutzkolloid bei der Herstellung von Polymerdispersionen.

## Claims

1. A water-soluble cellulose ether silylated with at least one organosilyl group containing one or more silicon atoms, wherein the organosilyl group(s) is (are) attached hydrolysis-stably to the cellulose ether and the remaining substituents of the silicon atom or silicon atoms of the organosilyl group(s) are stable to hydrolysis.

2. The cellulose ether as claimed in claim 1, wherein the silyl-containing reagent or reagents for silylating the cellulose ether preferably comprise organosilicon compounds having the compositions 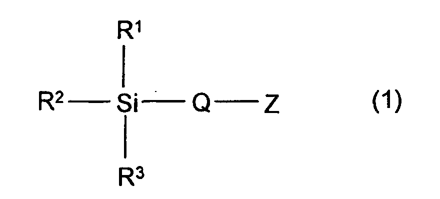 and/or 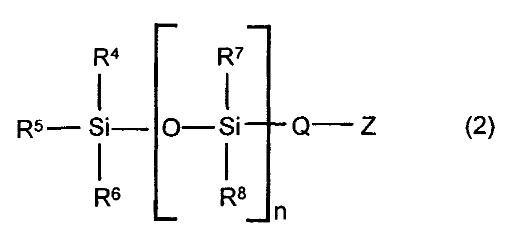 where
a) R¹ to R⁸ independently of one another are identical or different and are straight-chain or branched alkyl radicals, straight-chain or branched alkenyl radicals, aryl radicals and/or arylalkyl radicals containing straight-chain and/or branched alkyl groups,
b) Z is a reactive functional group suitable for covalent bonding to cellulose ethers and selected from the group consisting of Cl, Br, I, isocyanate, epoxy groups, glycidyloxy groups, acid halide groups and/or acid anhydride groups,
c) Q is a spacer group between the reactive group Z and the organosilyl group, and
d) n is from 1 to 100.

3. The cellulose ether as claimed in claim 2, wherein R¹ to R⁸ are C₁-C₂₀ alkyl radicals and/or phenyl radicals, Z is an epoxy group, and Q is a C₁-C₂₀ hydrocarbon chain.

4. The cellulose ether as claimed in at least one of claims 1 to 3, wherein the average number of silyl groups per anhydroglucose unit (DS silyl) is from 0.0002 to 0.2.

5. The cellulose ether as claimed in at least one of claims 1 to 4, wherein the cellulose ether comprises a silylated hydroxyethylcellulose, a silylated hydroxypropylcellulose, a silylated carboxymethylcellulose, a silylated carboxymethylhydroxyethylcellulose, a silylated methylcellulose, a silylated methylhydroxyethylcellulose or a silylated methylhydroxypropylcellulose.

6. A process for preparing a silylated cellulose ether as claimed in at least one of claims 1 to 5, which comprises reacting cellulose with base catalysis with one or more etherifying agents selected from the group consisting of ethylene oxide, propylene oxide, methyl chloride, monochloroacetic acid and sodium monochloroacetate and with at least one silylating reagent.

7. A process for preparing a cellulose ether as claimed in at least one of claims 1 to 5, which comprises reacting a cellulose ether with base catalysis with at least one silylating reagent.

8. The process as claimed in claim 7, wherein the cellulose ether to be silylated comprises hydroxyethylcellulose, hydroxypropylcellulose, carboxymethylcellulose, carboxymethylhydroxyethylcellulose, methylcellulose, methylhydroxyethylcellulose or methylhydroxypropylcellulose.

9. The process as claimed in at least one of claims 6 to 8, wherein the silylating reagents comprise organosilicon compounds as set forth in claim 2.

10. The use of a silylated cellulose ether or of a mixture of silylated cellulose ethers as claimed in at least one of claims 1 to 5 as a thickening auxiliary in paints, adhesives or cosmetics.

11. The use of a silylated cellulose ether or of a mixture of silylated cellulose ethers as claimed in at least one of claims 1 to 5 as a protective colloid in the preparation of polymer dispersions.

## Revendications

1. Ether cellulosique silylé hydrosoluble, présentant au moins un groupe organosilyle, renfermant un ou plusieurs atomes de silicium, **caractérisé en ce que** le(s) groupe(s) organosilyle(s) est (sont) lié(s) à l'éther cellulosique par une liaison stable à l'hydrolyse et les autres substituants de l'atome de silicium ou des atomes de silicium du (des) groupe(s) organosilyle(s) sont stables à l'hydrolyse.

2. Ether cellulosique selon la revendication 1, **caractérisé en ce qu'**il s'agit, pour le réactif renfermant des groupes silyles ou les réactifs renfermant des groupes silyles pour la silylation de l'éther cellulosique, de composés organosiliciés de compositions générales 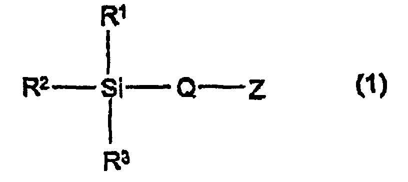 et/ou 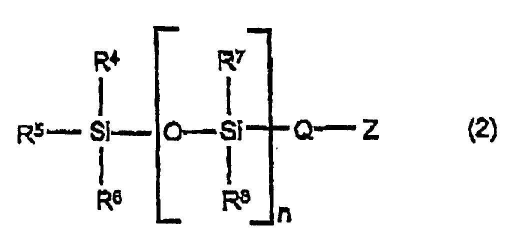
a) R¹ à R⁸ indépendamment les uns des autres sont identiques ou différents et représentent des radicaux alkyles linéaires ou ramifiés, des radicaux alcényles linéaires ou ramifiés, des radicaux aryles et/ou radicaux arylalkyles présentant des groupes alkyles linéaires et/ou ramifiés,
b) Z est une fonction réactive appropriée pour la liaison covalente sur l'éther cellulosique prise dans le groupe comprenant C1, Br, I, isocyanate, les groupements époxydes, les groupements glycidoxy, les groupements halogénures d'acide et/ou groupements anhydrides d'acide,
c) Q est un groupe espaceur entre le groupe réactif Z et le groupe organosilyle et
d) n va de 1 à 100.

3. Ether cellulosique selon la revendication 2, **caractérisé en ce qu'**il s'agit pour R¹ à R⁸ de restes alkyle en C₁-C₂₀ et/ou restes phényle, pour Z d'un groupe époxy et pour Q d'une chaîne hydrocarbonée en C₁-C₂₀.

4. Ether cellulosique selon au moins l'une des revendications 1 à 3, **caractérisé en ce que** le nombre moyen des groupements silyles par unité anhydroglucose (DS silyle) est de 0,0002 à 0,2.

5. Ether cellulosique selon au moins l'une des revendications 1 à 4, **caractérisé en ce qu'**il s'agit pour l'éther cellulosique d'une hydroxyéthylcellulose silylée, d'une hydroxypropylcellulose silylée, d'une carboxyméthylcellulose silylée, d'une carboxyméthylhydroxyéthylcellulose silylée, d'une méthylcellulose silylée, d'une méthylhydroxyéthylcellulose silylée ou d'une méthylhydroxypropylcellulose silylée.

6. Procédé pour la préparation d'un éther cellulosique silylé selon au moins l'une des revendications 1 à 5, **caractérisé en ce qu'**on transforme la cellulose sous catalyse basique par un ou plusieurs agents d'éthérification pris dans le groupe comprenant l'oxyde d'éthylène, l'oxyde de propylène, le chlorure de méthyle, l'acide monochloracétique et le monochloracétate de sodium et au moins un réactif de silylation.

7. Procédé pour la préparation d'un éther cellulosique silylé selon au moins l'une des revendications 1 à 5, **caractérisé en ce qu'**on transforme un éther cellulosique sous catalyse basique par au moins un réactif de silylation.

8. Procédé selon la revendication 7, **caractérisé en ce qu'**il s'agit pour l'éther cellulosique à silyler d'hydroxyéthylcellulose, d'hydroxypropylcellulose, de carboxyméthylcellulose, de carboxyméthylhydroxyéthylcellulose, de méthylcellulose, de méthylhydroxyéthylcellulose ou de méthylhydroxypropylcellulose.

9. Procédé selon au moins l'une des revendications 6 à 8, **caractérisé en ce qu'**il s'agit pour les réactifs de silylation de composés organosiliciés selon la revendication 2.

10. Utilisation d'un éther cellulosique silylé ou d'un mélange d'éthers cellulosiques silylés selon au moins l'une des revendications 1 à 5 en tant qu'adjuvant épaississant dans des colorants, des adhésifs et des produits cosmétiques.

11. Utilisation d'un éther cellulosique silylé ou d'un mélange d'éthers cellulosiques silylés selon au moins l'une des revendications 1 à 5 en tant que colloïde protecteur pour la préparation de dispersions de polymères.
